(19) Europäisches Patentamt
European Patent Office
Office européen des brevets

(11) **EP 3 905 883 B1**

(12) **EUROPEAN PATENT SPECIFICATION**

(45) Date of publication and mention
of the grant of the patent:
**27.03.2024 Bulletin 2024/13**

(51) International Patent Classification (IPC):
**A01N 47/04** (2006.01)  **A01P 3/00** (2006.01)
**A01N 43/56** (2006.01)

(21) Application number: **19835829.3**

(52) Cooperative Patent Classification (CPC):
(C-Sets available)
**A01N 47/04; A01N 37/24; A01N 43/08;**
**A01N 43/10; A01N 43/32; A01N 43/40;**
**A01N 43/56; A01N 43/78; A01N 45/02; A01N 47/38**

(22) Date of filing: **30.12.2019**

(Cont.)

(86) International application number:
**PCT/IL2019/051432**

(87) International publication number:
**WO 2020/141512 (09.07.2020 Gazette 2020/28)**

(54) **FUNGICIDAL MIXTURE**

FUNGIZIDE MISCHUNG

MÉLANGE FONGICIDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Validation States:
**MA**

(30) Priority: **31.12.2018 US 201862786591 P**

(43) Date of publication of application:
**10.11.2021 Bulletin 2021/45**

(60) Divisional application:
**24157495.3**
**24157499.5**
**24157500.0**

(73) Proprietor: **Adama Makhteshim Ltd.**
**8410001 Beer-Sheva (IL)**

(72) Inventors:
• POLLMANN, Bernardo
78244 Gottmadingen (DE)
• HUGO, Kalla
8804 Zürich, Au (CH)
• CHEYLAN, Simon
92500 Rueil-Malmaison (FR)
• HUART, Gerald
91460 Marcoussis (FR)

(74) Representative: **Modiano, Gabriella Diana et al**
**Modiano & Partners (DE)**
**Thierschstrasse 11**
**80538 München (DE)**

(56) References cited:
EP-A1- 2 950 651    EP-A1- 2 950 652
WO-A1-2017/157910    WO-A1-2019/077460
WO-A1-2019/186359    CN-A- 105 766 952
CN-A- 106 857 587    CN-A- 106 879 614
CN-A- 107 006 500    CN-A- 107 197 872
CN-A- 107 279 161    CN-A- 107 372 549
CN-A- 107 372 550    CN-A- 108 207 974
CN-A- 108 207 975    CN-A- 108 782 578
CN-A- 108 849 947    US-A1- 2013 274 101
US-B2- 7 776 892

• Walters Dale R. ET AL: "Ramularia collo-cygni :
the biology of an emerging pathogen of barley",
FEMS Microbiology Letters, vol. 279, no. 1, 1
February 2008 (2008-02-01), pages 1-7,
XP093011232, ISSN: 0378-1097, DOI:
10.1111/j.1574-6968.2007.00986.x

(52) Cooperative Patent Classification (CPC): (Cont.)

C-Sets
**A01N 47/04, A01N 37/24;**
**A01N 47/04, A01N 43/08;**
**A01N 47/04, A01N 43/10;**
**A01N 47/04, A01N 43/32;**
**A01N 47/04, A01N 43/40;**
**A01N 47/04, A01N 43/56;**
**A01N 47/04, A01N 43/78;**
**A01N 47/04, A01N 45/02;**
**A01N 47/04, A01N 47/38**

**Description**

FIELD AND BACKGROUND OF THE INVENTION

The present subject matter relates to the use of a fungicidal combination that comprises a combination of a) fluxapyroxad; and b) folpet, and to a method for controlling *Ramularia* fungal disease by using said combination.

Fungicides are an integral and important tool to control diseases, as well as to improve yields and quality of the crops.

Succinate dehydrogenase inhibitor (SDHI) fungicides are known in the art to have a broad spectrum of activity and have very good efficacy against several fungal diseases.

Septoria tritici blotch, also called Septoria leaf spot or speckled leaf blotch of wheat is caused by the fungus *Mycosphaerella graminicola* (asexual stage *Zymoseptoria tritici,* synonym *Septoria tritici*). Septoria tritici blotch survives from one season to the next on stubble. Following rain or heavy dew in late autumn and early winter, wind borne spores (ascospores) are released from fruiting bodies (perithecia) embedded in the stubble of previously infected plants. These spores can be spread over large distances. Septoria develops fast resistance against fungicides.

Folpet is a protectant fungicide from the phthalimide chemical group with multisite contact activity. Multisite fungicides display a low risk to develop resistance and are effective mixing/alternating partners for medium to high risk fungicides. Further to protecting and prolonging the lifespan of highly effective medium to high resistance risk fungicides, multisite fungicides provide added levels and spectrum of disease control. Multisite fungicides are considered a valuable tool to manage resistance by preventing or delaying its development to many pathogens in many crops.

Mixtures of SDHI fungicides with triazoles or strobilurins are not sufficient to avoid resistance development.

As crop tolerances are decreasing, and resistance being increasingly observed, there is a need for a combination of fungicides that allows for broader disease control spectrum and has a lower dosage requirement for control of fungi.

In light of the above, there is still a need for novel fungicidal compositions that exhibit synergistically enhanced action, a broader scope of activity and reduced cost of treatment.

It is an object of the present invention, to use a fungicidal mixture of a) fluxapyroxad and b) folpet which, at a reduced total amount of active compounds applied, have improved activity against Ramularia. The mixture allows better control of harmful fungi than is possible with the solo use of the individual compounds, thereby providing a synergistic mixture. The combination of fluxapyroxad and folpet is known from CN105766952.

SUMMARY OF THE INVENTION

The present subject matter relates to a method of controlling fungal disease comprising applying to the locus of the plant a mixture or a composition comprising, as active components a) fluxapyroxad and b) folpet.

DETAILED DESCRIPTION OF SPECIFIC EMBODIMENTS OF THE INVENTION

Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

As used herein the term "plant" or "crop" includes reference to whole plants, plant organs (e.g. leaves, stems, twigs, roots, trunks, limbs, shoots, fruits etc.), plant cells, or plant seeds. This term also encompasses plant crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil.

As used herein, the term "locus" includes a habitat, breeding ground, plant, propagation material, soil, area, material or environment in which a pest is growing or may grow.

As used herein, the terms "control" or "controlling" refers to preventing disease, protecting plants from disease, delaying the onset of disease, and combating or killing disease.

The term "contacting", as used herein, refers to applying the compounds and compositions of the invention to the plant, to a site of infestation by fungi, to a potential site of infestation by the fungi, which may require protection from infestation, or the environment around the habitat or potential habitat of the fungi. The application may be by methods described in the present invention such as by spraying, dipping, etc.

As used herein, the term "effective amount" refers to an amount of the agrochemical composition or of the mixture which is sufficient for controlling harmful fungi on crop plants and does not cause any significant damage to the treated crop plants.

As used herein, the term "mixture" or "combination" refers, but is not limited to, a combination in any physical form, e.g., blend, solution, alloy, or the like.

As used herein, the term "cultivated plants" includes plants which have been modified by breeding, mutagenesis or genetic engineering. Genetically modified plants are plants, which their genetic material has been modified by the use of recombinant DNA techniques. Typically, one or more genes have been integrated into the genetic material of such a plant in order to improve certain properties of the plant.

The term "plant health" comprises various sorts of improvements of plants that are not connected to the control of pests. For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), reduced ethylene (reduced production and/or inhibition of reception), increase in plant height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less plant verse (lodging), increased shoot growth, enhanced plant vigor, increased plant stand and early and better germination; or any other advantages familiar to a person skilled in the art.

As used herein, the phrase "agriculturally acceptable carrier" means carriers which are known and accepted in the art for the formation of compositions for agricultural or horticultural use.

Throughout the application, descriptions of various embodiments use the term "comprising"; however, it will be understood by one of skill in the art, that in some specific instances, an embodiment can alternatively be described using the language "consisting essentially of" or "consisting of."

The term "a" or "an" as used herein includes the singular and the plural, unless specifically stated otherwise. Therefore, the terms "a," "an" or "at least one" can be used interchangeably in this application.

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, used of the term "about" herein specifically includes ±10% from the indicated values in the range. In addition, the endpoints of all ranges directed to the same component or property herein are inclusive of the endpoints, are independently combinable, and include all intermediate points and ranges.

## Fungicidal Mixture

It has been surprisingly found that by combining fluxapyroxad and folpet, fungicidal mixtures that exhibit a broad spectrum of control and high efficacy are produced.

In some embodiments, the combination provides a higher fungicidal activity than that envisaged on the basis of the sum of activities of each of the fungicides found therein. Such a combination allows the reduced dosages of the individual fungicides which can damage agriculturally important plants.

Thus, an enhanced, synergistic fungicidal activity is observed when a fungicidal mixture comprising, as active components a) fluxapyroxad and b) folpet is used for the control of *Ramularia* fungi.

It has been found that the combination of fluxapyroxad with folpet resulted in surprising and unexpected advantages. It was found that the combination of fluxapyroxad with folpet resulted in an enhancement of the efficacy, and a reduction in the occurrence of *Ramularia* fungal disease. It was also found that the addition of folpet to fluxapyroxad provided a delay in resistance development.

Due to the resistance reducing properties of a mixture of fluxapyroxad and folpet, a second application of fluxapyroxad during a crop season may be applied, thereby providing a further tool in combating the disease.

It has been surprisingly found that when mixing fluxapyroxad with folpet, the uptake of the partner product is not adversely affected by the inclusion of folpet. This may lead to an elevated efficacy in the field.

The weight ratio of fluxapyroxad to folpet is from about 1:10 to about 1:6.

A mixture of a) fluxapyroxad and b) folpet or the corresponding formulations are applied thereby treating Ramularia, their habitat or the plants, seeds, or soil with a fungicidally effective amount of the mixture or, in the case of separate application, of the mixture of a) fluxapyroxad and b) folpet. Application can be before or after the infection by Ramularia.

The plants include wheat, rye, barley, triticale, oats, sorghum, rice, corn and cotton.

In still another embodiment, the plants include cultivated plants which tolerate the action of herbicides, fungicides or insecticides as a result of breeding and/or genetically engineered methods.

The treated diseases comprise Ramularia species on cereals, barley and cotton, for example, Ramularia collo-cygni on barley and Ramularia areola on cotton

Application of the inventive compositions to plants may also lead to an increase in the crop yield.

In a specific embodiment, a mixture of fluxapyroxad and folpet can be applied in the early stages of the crop cycle. The mixture of fluxapyroxad may be applied during the T1 stage of growth. The early application would allow folpet to provide early protection during the early stages of growth and fluxapyroxad to provide long lasting protectant efficacy.

The effective application rates of the succinate dehydrogenase inhibitor fungicide and folpet cannot generally be defined, as it varies depending upon various conditions such as the type of the formulation, weather conditions, the type of crop and the type of pests.

The application rates for fluxapyroxad are from 20 to 200 g/ha.

The the application rates for folpet are from 500 to 1000 g/ha.

In another embodiment, fluxapyroxad and folpet can be applied simultaneously, that is jointly or separately, or in succession, in sequence, in the case of separate application. The application of the two compounds jointly or separately generally does not have any effect on the result of the control measures.

For example, fluxapyroxad and folpet can be applied simultaneously, that is jointly or separately, or in succession, the sequence, in the case of separate application, generally not having any effect on the result of the control measures. In one example, fluxapyroxad and folpet are prepared separately, and the individual formulations are applied as is, or diluted to predetermined concentrations. In a further example, fluxapyroxad and folpet are prepared separately, and the formulations are mixed when diluted to a predetermined concentration. In another example, fluxapyroxad and folpet are formulated together, and the formulation is applied as it is, or the formulation is diluted to a predetermined concentration.

The mixture of active substances can be diluted and applied in a customary manner, for example by watering (drenching), drip irrigation, spraying, and atomizing.

In yet another embodiment, the synergistic composition may be applied in various mixtures or combinations of fluxapyroxad and folpet, for example in a single "ready-for-use" form, or in a combined spray mixture composed from separate formulations of the single active ingredients, such as a "tank-mix" form.

In yet another embodiment, the composition is applied in the form of a ready-for-use formulation comprising fluxapyroxad and folpet. This formulation can be obtained by combining the two active ingredients in a fungicidal effective amount with an agriculturally acceptable carrier, a surfactant or other application-promoting adjuvant customarily employed in formulation technology.

For example, the composition of the present invention is preferably applied in the form of a ready-for-use formulation comprising fluxapyroxad and folpet, which can be obtained by combining the three active ingredients with an agriculturally acceptable carrier, a surfactant or other application-promoting adjuvant customarily employed in formulation technology.

The present composition may be employed or prepared in any conventional form, for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), suspension concentrates, dusts (DP), oil-miscible solutions (OL), seed-dressing products, granules (GR) in the form of microgranules, spray granules, coated granules and absorption granules, granules for soil application or broadcasting, water-soluble granules (SG), water-dispersible granules (WDG), ULV formulations, microcapsules or waxes. These individual formulation types are known in the art.

According to an embodiment, the composition comprises at least one additional component selected from the group of surfactants, solid diluents and liquid diluents.

Such compositions can be formulated using agriculturally acceptable carriers, surfactants or other application-promoting adjuvants customarily employed in formulation technology and formulation techniques that are known in the art.

Examples of suitable liquid carriers potentially useful in the present compositions include but are not limited to water; aromatic hydrocarbons such as alkylbenzenes and alkylnaphthalenes; alcohols such as cyclohexanol, and decanol; ethylene glycol; polypropylene glycol; dipropylene glycol; N,N-dimethylformamide; dimethylsulfoxide; dimethylacetamide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4-methyl-2-pentanone; and the like.

Examples of suitable solid carriers potentially useful in the present compositions include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols, sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active ingredient, wetting agent, tackifier, dispersant or emulsifier and, if desired, a solvent or oil, which are suitable for dilution with water.

In an embodiment, the amount of the mixture of active ingredients in the composition is from about 0.1%, 0.5%, 1%, 1.5%, 2%, 2.5%, 3%, 3.5%, 4%, 4.5%, 5% to about 90%, 93%, 95%, 98%, 99% based on the total weight of the composition.

In another embodiment, the combined amount of fluxapyroxad and folpet together in the ready-to-use formulations is 1-95 wt. %, particularly 75-95 wt. %, based on the total weight of the formulation.

For example, the combined amount of fluxapyroxad and folpet in the ready-to-use formulations according to the invention is 0.01-95 wt.%, particularly 0.1-90 wt. %, more particularly 1-90 wt. %, even more particularly is 10-90 wt. %, based on the total weight of the formulation.

The present composition may include additional crop protection agents, for example insecticides, herbicides, fungicides, bactericides, nematicides, molluscicides, growth regulators, biological agents, fertilizers, or mixtures thereof. However, for the avoidance of doubt it is understood that such additional crop protection agents are unnecessary to achieve the desired control of fungal disease as achieved by the present combinations. Accordingly, the present fungicidal compositions and mixtures may be limited to containing a succinate dehydrogenase inhibitor fungicide (e.g. fluxapyroxad) and folpet, as the only crop protection agents present.

As noted above, the methods described herein exhibit a synergistic effect. A synergistic effect exists wherever the action of a combination of active components is greater than the sum of the action of each of the components alone. Therefore, a synergistically effective amount (or an effective amount of a synergistic composition or combination) is an amount that exhibits greater fungicidal activity than the sum of the fungicidal activities of the individual components.

The following examples illustrate the practice of the present invention in some of its embodiments.

EXAMPLE 1

An experiment was conducted to evaluate the fungicidal control of *Ramularia collo-cygni* on winter barley with a dehydrogenase inhibitor fungicide (fluxapyroxad), and folpet, alone, and in binary mixtures.

The experiments were conducted by applying a commercially available composition of fluxapyroxad (Imtrex®) and folpet (MCW-296 SC) alone or together. The compositions were diluted with water to the stated concentration of the active compound.

The following active ingredients and their mixtures were evaluated:

- Fluxapyroxad 90 gr (A.I.)/ha
- Folpet 750 gr (A.I.)/ha
- Fluxapyroxad + Folpet 90 gr (A.I.)/ha + 750 gr (A.I.)/ha

To test for fungicidal control of *Ramularia collo-cygni,* the winter barley was sprayed with each of the above treatments. Each of the above treatments were applied twice, the 2nd treatment occurring 14 days after the first treatment. The treatments were composed of 4 replicates.

Evaluations were performed at 38 days and 44 days after the second treatment. At these times the severity of the *Ramularia collo-cygni* was determined. At the time of the 1st evaluation (38 days after the second treatment) the severity of the infection of *Ramularia collo-cygni* on the winter barley was 85.6%. At the time of the 2nd evaluation (44 days after the second treatment) the severity was 100%.

Table 1 below summarize the calculated synergy (Colby ratio) for the mixture of fluxapyroxad and folpet at each of the evaluation periods.

Table 1: Effect of tank mix of Fluxapyroxad + Folpet on *Ramularia collo-cygni*

| AI | Application rate (gr/ha) | % control observed | | % control expected | | Colby Ratio o/e | |
|---|---|---|---|---|---|---|---|
| | | 38 Days after 2nd application | 44 Days after 2nd application | 38 Days after 2nd application | 44 Days after 2nd application | 38 Days after 2nd application | 44 Days after 2nd application |
| Fluxapyroxad | 90 | 47.1 | 12.2 | | | | |
| Folpet | 750 | 30.3 | 9.7 | | | | |
| Fluxapyroxad + Folpet | 90+750 | 92.6 | 92.8 | 63.1 | 20.7 | **1.47** | **4.48** |

The visually determined percentages of infected leaf areas may be converted into efficacies in % of the untreated control:

The efficacy (E) is calculated as follows using Abbott's formula:

$$E=(1-A/B)\cdot 100$$

A corresponds to the fungicidal infection of the treated plants in % and

B corresponds to the fungicidal infection of the untreated (control) plants in %.

An efficacy of 0 means that the infection level of the treated plants corresponds to that of the untreated control plants; an efficacy of 100 means that the treated plants are not infected.

A synergistic effect exists whenever the action of an active ingredient combination is greater than the sum of the actions of the individual components.

In the field of agriculture, it is often understood that the term "synergy" is as defined by Colby S. R. in an article entitled "Calculation of the synergistic and antagonistic responses of herbicide combinations" published in the journal Weeds, 1967, 15, p. 20-22. The action expected for a given combination of two active components can be calculated as follows:

$$E = X + Y - \frac{XY}{100}$$

in which E represents the expected percentage of fungicidal control for the combination of the two fungicides at defined doses (for example equal to x and y respectively), X is the percentage of fungicidal control observed by the compound (I) at a defined dose (equal to x), Y is the percentage of fungicidal control observed by the compound (II) at a defined dose (equal to y). When the percentage of fungicidal control observed for the combination is greater than the expected percentage, there is a synergistic effect.

The table above clearly shows that the observed activity of the active compound combination according to the invention is greater than the calculated activity, i.e. a synergistic effect is present.

**Claims**

1. A method of controlling *Ramularia species* on cereals, barley and cotton, the method comprising applying to the locus of a plant a fungicidal composition comprising, as active components, Fluxapyroxad and Folpet in a weight ratio from 1:6±10% to 1:10±10%, and wherein Folpet is applied at application rates of from 500±10% to 1000±10% g a.i./ha and Fluxapyroxad is applied at application rates of from 20±10% to 200±10% g a.i./ha.

2. The method as claimed in claim 1, wherein the *Ramularia species* is selected from the group of *Ramularia collo-cygni* on barley and *Ramularia areola* on cotton.

3. The method as claimed in claims 1 or 2, wherein the *Ramularia species* is *Ramularia collo-cygni* on winter barley.

4. The method as claimed in any one of claims 1-3, wherein the Fluxapyroxad and Folpet are applied jointly, separately, or in succession.

**Patentansprüche**

1. Ein Verfahren zur Kontrolle von *Ramularia-Spezies* auf Getreide, Gerste und Baumwolle, wobei das Verfahren Folgendes umfasst: das Auftragen, auf den Locus einer Pflanze, einer fungiziden Zusammensetzung, die als aktive Komponenten Fluxapyroxad und Folpet in einem Gewichtsverhältnis von 1:6110% bis 1:10±10% umfasst; und wobei Folpet mit Applikationsraten von 500110% bis 1000±10% g Wirkstoff/ha appliziert wird und Fluxapyroxad mit Applikationsraten von 20110% bis 200110% g Wirkstoff/ha appliziert wird.

2. Das Verfahren gemäß Anspruch 1, worin die *Ramularia-Spezies* gewählt ist aus der Gruppe von *Ramularia collo-*

*cygni* auf Gerste und *Ramularia areola* auf Baumwolle.

3. Das Verfahren gemäß Anspruch 1 oder 2, worin die *Ramularia-Spezies Ramularia collo-cygni* auf Wintergerste ist.

4. Das Verfahren gemäß einem beliebigen der Ansprüche 1-3, worin das Fluxapyroxad und Folpet gemeinsam, separat oder nacheinander appliziert werden.


**Revendications**

1. Procédé de lutte contre une *espèce Ramularia* sur les céréales, l'orge et le coton, le procédé comprenant l'application, sur le locus d'une plante, d'une composition fongicide comprenant, en tant que composants actifs, du fluxapyroxad et du folpet selon un rapport en poids de 1:6 ± 10 % à 1:10 ± 10 %, et dans lequel le folpet est appliqué à des taux d'application de 500 ± 10 % à 1 000 ± 10 % grammes d'ingrédient actif par hectare et le fluxapyroxad est appliqué à des taux d'application de 20 ± 10 % à 200 ± 10 % grammes d'ingrédient actif par hectare.

2. Procédé selon la revendication 1, dans lequel *l'espèce Ramularia* est sélectionnée parmi le groupe de *Ramularia collo-cygni* sur l'orge et de *Ramularia areola* sur le coton.

3. Procédé selon les revendications 1 ou 2, dans lequel *l'espèce Ramularia* est *Ramularia collo-cygni* sur l'orge d'hiver.

4. Procédé selon l'une quelconque des revendications 1 à 3, dans lequel le fluxapyroxad et le folpet sont appliqués conjointement, séparément ou successivement.

## REFERENCES CITED IN THE DESCRIPTION

**Patent documents cited in the description**

- CN 105766952

**Non-patent literature cited in the description**

- **COLBY S. R.** Calculation of the synergistic and antagonistic responses of herbicide combinations. *Weeds,* 1967, vol. 15, 20-22